# EUROPEAN PATENT APPLICATION

(11) **EP 4 632 775 A1**
(43) Date of publication of application: **15.10.2025**
(21) Application number: 23900577.0
(22) Date of filing: 01.12.2023
(51) Int. Cl.: H01G 9/10, H01G 9/00, H01G 9/08

(54) **ELECTROLYTIC CAPACITOR**

(30) Priority: 06.12.2022 JP 2022194856
(71) Applicant: Sun Electronic Industries Corp., Shijonawate-City, Osaka 575-8585 (JP)
(72) Inventor: HASABA, Yoshiaki, Shijonawate-City, Osaka 5758585 (JP); ADACHI, Takahisa, Shijonawate-City, Osaka 5758585 (JP); HAMANO, Kanji, Shijonawate-City, Osaka 5758585 (JP); HOSOGI, Masakazu, Shijonawate-City, Osaka 5758585 (JP)
(74) Representative: Hoffmann Eitle
(86) International application number: PCT/JP2023/043113
(87) International publication number: WO 2024/122462

(57) **Abstract**

A sealing material has, in its face facing an opening of a body case, a depressed portion depressed toward a capacitor element with an outer diameter smaller than that of the sealing material, and an outer circumference holding portion around the outer circumference of the depressed portion. In the depressed portion, an external pressure deformation suppressing plate in a plate shape is provided, and at least part of an outer circumferential portion of the external pressure deformation suppressing plate provided in the depressed portion is covered with an inner circumferential part of the outer circumference holding portion of the sealing material.

## Description

### Technical Field

The present invention relates to an electrolytic capacitor.

### Background Art

An electrolytic capacitor includes a body case in a cylindrical shape that is closed at one end and that has an opening at the other end, a capacitor element housed in the body case, and a sealing material in a plate shape that seals the opening of the body case. The capacitor element includes an anode foil and a cathode foil wound up with a separator in between, with one ends of lead terminals connected to the anode and cathode foils respectively, with the other ends of the lead terminals laid through the sealing material out of the opening of the body case.

Here the following proposals have been made: to prevent heat-induced deterioration of the sealing material, the face of the sealing material facing outside the body case is covered with an electrically insulating inorganic layer (e.g., Patent Document 1 below); to prevent leakage of the electrolytic solution out of the body case, the face of the sealing material facing outside the body case is covered with a resin layer (e.g., Patent Document 2 below); and to prevent deformation of the sealing material out of the body case under an increased atmospheric pressure in the body case, a ceramic reinforcement member is provided at the side of the sealing material outside the body case (e.g., Patent Document 3 below).

### Citation List

### Patent Literature

Patent Document 1: Unexamined Japanese Patent Application Publication No. 2019-140257
Patent Document 2: Unexamined Japanese Patent Application Publication No. 2015-173241
Patent Document 3: Unexamined Japanese Patent Application Publication No. 08-293435

### Summary of Invention

### Technical Problem

While, in the above patent literature, the face of the sealing material facing outside the body case is covered with an electrically insulating inorganic layer (Patent Document 1) or with a resin layer (Patent Document 2) or a ceramic reinforcement member is provided at the side of the sealing material outside the body case (Patent Document 3), these inorganic layer, resin layer, and ceramic reinforcement member have the sane diameter as the sealing material, and moreover they are provided unitarily with the sealing material as by being bonded to them.

Inconveniently, with the inorganic layer, resin layer, or ceramic reinforcement member provided unitarily on the face of the sealing material facing the opening of the body case, and moreover, with their outer diameter the same as that of the sealing material, the sealing material is hindered to follow the expansion or contraction of the body case according to the environment around the electrolytic capacitor. This leads to a poor sealing effect of the sealing material for the body case.

Under the above background, an object of the present invention is to suppress a drop in the sealing effect of a sealing material for a body case resulting from expansion and contraction of the body case depending on the environment around an electrolytic capacitor, and to prevent, during the molding of an outer circumferential portion of the electrolytic capacitor with molding resin, the molding resin from greatly pressing and deforming the sealing material into the body case and adversely affecting the capacitor element.

### Solution to Problem

To attain the above object, an electrolytic capacitor according to the present invention includes a body case in a cylindrical shape that is closed at one end and that has an opening at the other end, a capacitor element housed in the body case, and a sealing material in a plate shape that seals the opening of the body case. The capacitor element includes an anode foil and a cathode foil wound up with a separator in between, with one ends of lead terminals connected to the anode and cathode foils respectively, with the other ends of the lead terminals laid through the sealing material out of the opening of the body case. The sealing material has, in its face facing the opening of the body case, a depressed portion depressed toward the capacitor element with an outer diameter smaller than that of the sealing material, and an outer circumference holding portion around the outer circumference of the depressed portion. In the depressed portion, an external pressure deformation suppressing plate in a plate shape is provided, and at least part of an outer circumferential portion of the external pressure deformation suppressing plate provided in the depressed portion is covered with an inner circumferential part of the outer circumference holding portion of the sealing material. In a part of the body case that corresponds to a part of the sealing material closer, along its plate thickness direction, to the capacitor element relative to the external pressure deformation suppressing plate, a drawn portion is provided that is radially drawn toward the sealing material. In the opening of the body case, a tip part of the body case facing its opening is bent to be curved toward the sealing material to form a bent portion, and the tip of the bent portion is in contact with or close to the face of the external pressure deformation suppressing plate facing the opening of the body case, which face is provided in a part of the sealing material inward of the outer circumference holding portion.

In the sealing material in the electrolytic capacitor according to the present invention, the outer circumferential surface of the outer circumference holding portion of the sealing material is an inclined face or a curved face with a diameter decreasing from a part of the outer circumference holding portion closer to the capacitor element toward a part of it facing the opening of the body case.

In the electrolytic capacitor according to the present invention, a gap formed, inward of the body case, at a part of it facing the inclined face or the curved face of the outer circumference holding portion of the sealing material, is a gap which is increasingly large from a part of the outer circumference holding portion closer to the capacitor element toward a part of the outer circumference holding portion facing the opening of the body case.

In the electrolytic capacitor according to the present invention, the external pressure deformation suppressing plate is formed of a compound resin plate with a reinforcing material mixed in it.

### Advantageous Effects of Invention

As described above, in the electrolytic capacitor according to the present invention, the sealing material has, in its face facing the opening of the body case, the depressed portion depressed toward the capacitor element with an outer diameter smaller than that of the sealing material, and the outer circumference holding portion around the outer circumference of the depressed portion. In the depressed portion, the external pressure deformation suppressing plate in a plate shape is provided, and at least part of the outer circumferential portion of the external pressure deformation suppressing plate provided in the depressed portion is covered with the inner circumferential part of the outer circumference holding portion of the sealing material.

In addition, in a part of the body case that corresponds to a part of the sealing material closer, along its plate thickness direction, to the capacitor element relative to the external pressure deformation suppressing plate, the drawn portion is provided that is radially drawn toward the sealing material. In the opening of the body case, a tip part of the body case facing the opening is bent to be curved toward the sealing material to form the bent portion, and the tip of the bent portion is in contact with or close to the face of the external pressure deformation suppressing plate facing the opening of the body case, which face is provided in a part of the sealing material inward of the outer circumference holding portion.

Thus, with the present invention, it is possible to suppress a drop in the sealing effect of the sealing material for the body case resulting from expansion and contraction of the body case depending on the environment around the electrolytic capacitor, and to prevent, during the molding of an outer circumferential portion of the electrolytic capacitor in molding resin, the molding resin from greatly pressing and deforming the sealing material into the body case and adversely affecting the capacitor element.

Since the sealing material according to the present invention has the depressed portion with an outer diameter smaller than that of the sealing material and has, in the depressed portion, the external pressure deformation suppressing plate, the outer circumferential portion of the sealing material less tends to be restrained by the external pressure deformation suppressing plate; this allows the outer circumference of the sealing material to expand and contract in response to the expansion and contraction of the body case depending on the environment around the electrolytic capacitor. Thus, it is possible to suppress a drop in the sealing effect for the body case.

During the molding of the outer circumferential portion of the electrolytic capacitor in the molding resin, part of the molding resin flows through the opening of the body case into the body case, pushing the sealing material toward the capacitor element. Here, according to the present invention, the external pressure deformation suppressing plate is provided in the part of the sealing material closer to the opening of the body case and the outer circumference of the external pressure deformation suppressing plate is held by the outer circumference holding portion of the sealing material. This helps prevent severe deformation of the sealing material toward the capacitor, preventing the adverse effect on the capacitor element.

### Brief Description of Drawings

[FIG. 1] is a sectional view of an electrolytic capacitor according to one embodiment of the present invention as mounted on a circuit board.
[FIG. 2] is an enlarged sectional view of the electrolytic capacitor.
[FIG. 3] is an enlarged sectional view of a principal part of the electrolytic capacitor.
[FIG. 4] is a sectional view of the electrolytic capacitor molded in molding resin.
[FIG. 5] is a sectional part view of the molded electrolytic capacitor.

### Description of Embodiments

### (Embodiment 1)

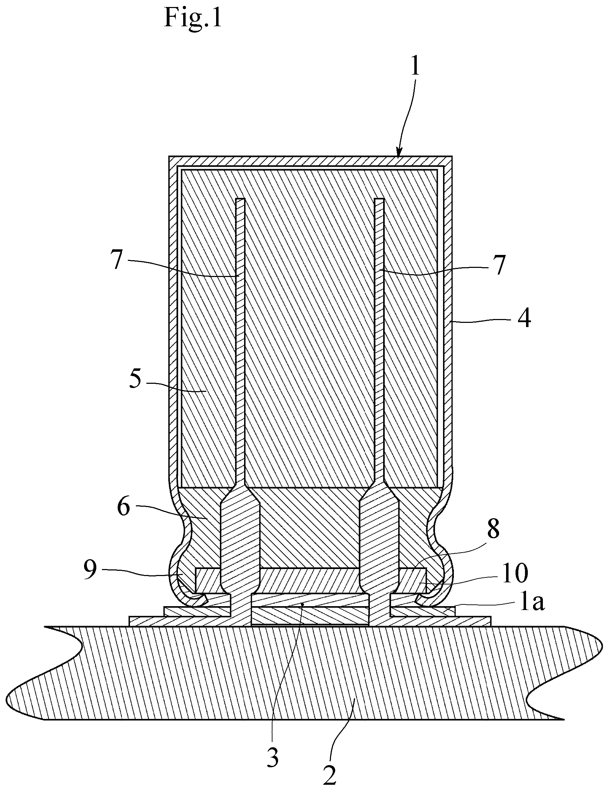

Fig. 1 shows an electrolytic capacitor 1 according to the embodiment mounted on a circuit board 2.

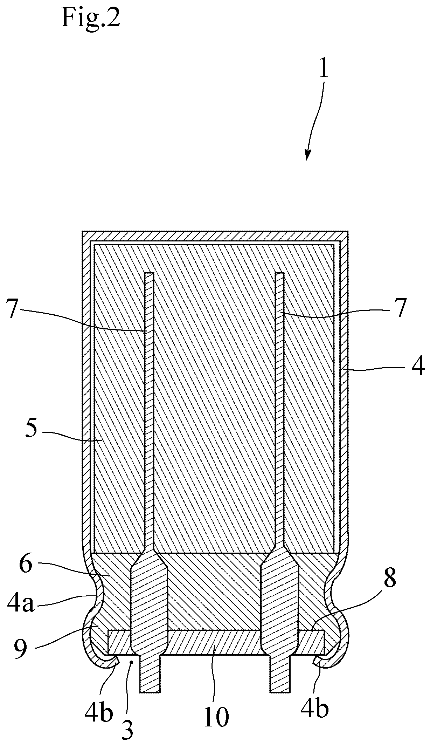

As shown in Fig. 2, the electrolytic capacitor 1 includes a body case 4 in a cylindrical shape that is closed at one end and that has an opening 3 at the other end, a capacitor element 5 housed in the body case 4, and a sealing material 6 in a plate shape that seals the opening 3 of the body case 4.

The body case 4 is made of, for example, aluminum and the sealing material 6 is made of, for example, butyl rubber.

As known in the above and other patent literature, the capacitor element 5 includes an anode foil (not shown) and a cathode foil (not shown) wound up with a separator (not shown) in between, with one ends of lead terminals 7 connected to the anode and cathode foils respectively, with the other ends of the lead terminals 7 laid through the sealing material 6 out of the opening 3 of the body case 4. In addition, the capacitor element 5 holds an electrolytic solution.

Note that the electrolytic capacitor 1 shown in Fig. 1 is provided with a well-known seat plate 1a for better mounting on the circuit board 2 with the tips of the other ends of the lead terminals 7 penetrating the seat plate 1a and bent left and rightward, so that these bent portions serve as parts to be soldered to the circuit board 2.

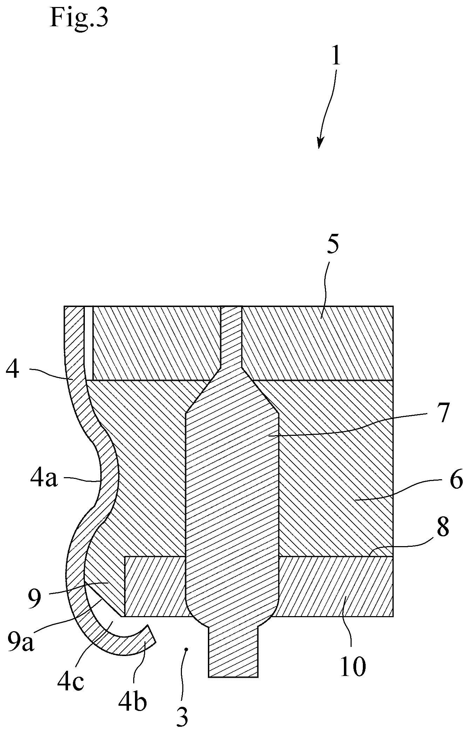

As shown in Figs. 2 and 3, the embodiment has the following distinctive features: the sealing material 6 is provided with, in its face facing the opening 3 of the body case 4, a depressed portion 8 depressed toward the capacitor element 5 with an outer diameter smaller than that of the sealing material 6, and an outer circumference holding portion 9 around the outer circumference of the depressed portion 8; in the depressed portion 8, an external pressure deformation suppressing plate 10 in a plate shape is provided; and at least part of an outer circumferential portion of the external pressure deformation suppressing plate 10 provided in the depressed portion 8 is covered with an inner circumferential part of the outer circumference holding portion 9 of the sealing material 6. Note that both the sealing material 6 and the external pressure deformation suppressing plate 10 are provided with penetrating holes penetrated by the other ends of the lead terminals 7. Thus, the other ends of the lead terminals 7 penetrate the penetrating holes in the sealing material 6 and the penetrating holes in the external pressure deformation suppressing plate 10 out of the opening 3 of the body case 4.

The external pressure deformation suppressing plate 10 is formed of a compound resin plate with a reinforcing material mixed in it, examples including bakelite (registered trademark).

Figs. 2 and 3 show some distinctive features of the electrolytic capacitor 1 shown in Fig. 1, showing among others the sealing material 6, the external pressure deformation suppressing plate 10, and the body case 4 while omitting the seat plate 1a and the like.

As shown in Figs. 2 and 3, in a part of the body case 4 that corresponds to a part of the sealing material 6 closer, along its plate thickness direction, to the capacitor element 5 relative to the external pressure deformation suppressing plate 10, a drawn portion 4a is provided that is radially drawn toward the sealing material 6.

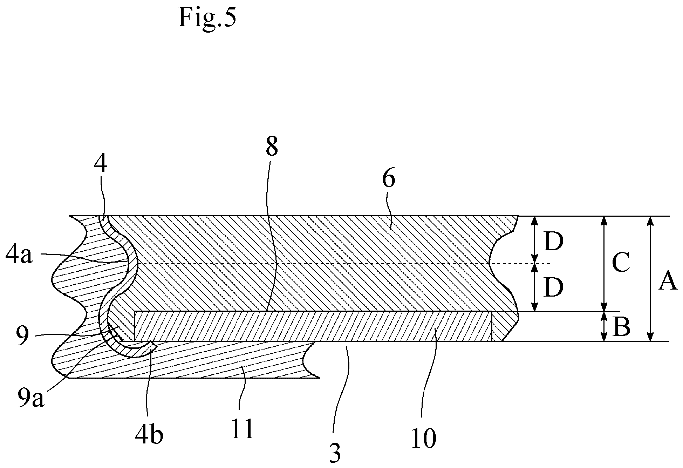

Fig. 5 shows one example of the dimensional relationship among the sealing material 6, the external pressure deformation suppressing plate 10, and the body case 4. Note that Fig. 5 focuses the dimensional relationship among the sealing material 6, the external pressure deformation suppressing plate 10, and the body case 4 while omitting the penetrating holes in the sealing material 6 and the external pressure deformation suppressing plate 10, which are penetrated by the other ends of the lead terminals 7.

In Fig. 5, the sealing material 6 in a disc shape has a plate thickness (A) of 3.3 mm and the external pressure deformation suppressing plate 10 in a disc shape has a plate thickness (B) of 0.8 mm. Thus, out of the plate thickness of the sealing material 6, the plate thickness (C) of the part of it closer to the capacitor element 5, excluding the plate thickness of the external pressure deformation suppressing plate 10, is 2.5 mm.

Accordingly, in the embodiment, out of the plate thickness of the sealing material 6, the dimension (D) of a middle portion of the plate thickness (2.5 mm) of the part of the sealing material 6 closer to the capacitor element 5, excluding the plate thickness of the external pressure deformation suppressing plate 10, is 1.25 mm, the middle portion corresponding to a center part of the drawn portion 4a.

Thus, the drawn portion 4a is provided substantially in the middle portion of the plate thickness of the sealing material 6 excluding that of the external pressure deformation suppressing plate 10.

As shown in Figs. 2 and 3, in the opening 3 of the body case 4, a tip part of the body case 4 facing the opening 3 is bent to be curved toward the sealing material 6 to provide a bent portion 4b. The tip of the bent portion 4b is in contact with or close to the face of the external pressure deformation suppressing plate 10 facing the opening 3 of the body case 4, which face is provided in a part of the sealing material 6 inward of the outer circumference holding portion 9.

The tip of the bent portion 4b of the body case 4 is in contact with or close to the face of the external pressure deformation suppressing plate 10 facing the opening 3 of the body case 4 (i.e., the tip of the bent portion 4b does not eat into the sealing material 6).

As shown in Fig. 3, the outer circumferential surface of the outer circumference holding portion 9 of the sealing material 6 is an inclined face 9a with a diameter decreasing from a part of the outer circumference holding portion 9 closer to the capacitor element 5 toward a part of it facing the opening 3 of the body case 4. The inclined face 9a can be a curved face with a diameter decreasing from a part of the outer circumference holding portion 9 closer to the capacitor element 5 toward a part of it facing the opening 3 of the body case 4.

In addition, as shown in Fig. 3, inward of the body case 4, at a part of it facing the inclined face 9a (or curved face) of the outer circumference holding portion 9 of the sealing material 6, a gap 4c is formed. The gap 4c is increasingly large from a part of the outer circumference holding portion 9 closer to the capacitor element 5 toward a part of the outer circumference holding portion 9 facing the opening 3 of the body case 4.

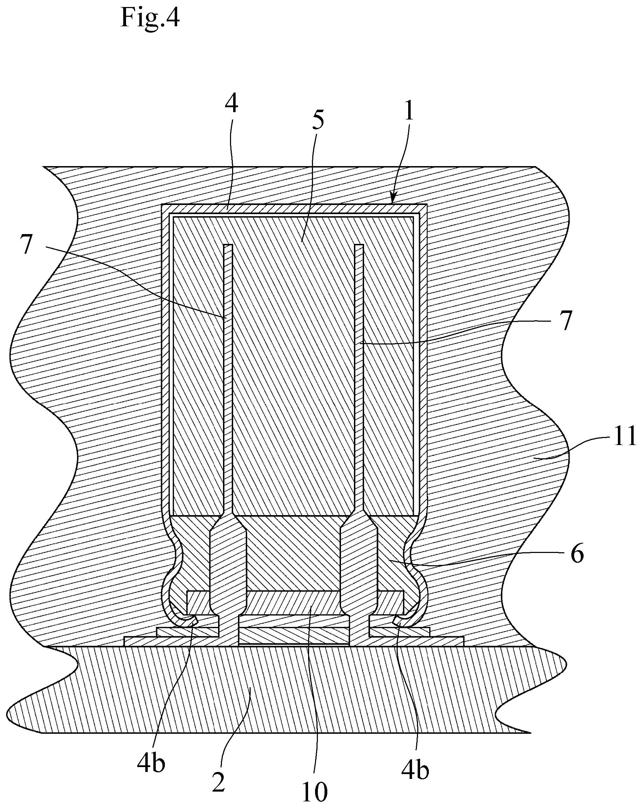

With the thus configured electrolytic capacitor 1 according to the embodiment, for waterproofing, moisture-proofing, improved chemical-proofing, dust proofing, and the like, as shown in Figs. 4 and 5, the body case 4 and the circuit board 2 can be molded together in molding resin 11. The molding can be done such that the electrolytic capacitor 1 and the side of the circuit board 2 facing the electrolytic capacitor 1 (i.e., its front side) are molded in the molding resin 11 or such that they are molded together with the back side of the circuit board 2.

The molding, as well known, proceeds by housing the circuit board 2 with the electrolytic capacitor 1 mounted on it in a mold (not shown) and injecting the molding resin 11 under pressure through a resin injection port (not shown) in the mold.

Here, according to the embodiment, the external pressure deformation suppressing plate 10 is provided in the part of the sealing material 6 closer to the opening 3 of the body case 4 and the outer circumference of the external pressure deformation suppressing plate 10 is held by the outer circumference holding portion 9 of the sealing material 6. This helps prevent severe deformation of the sealing material 6 toward the capacitor element 5, preventing the adverse effect on the capacitor element 5.

For example, during the molding mentioned above, the molding resin 11 is injected into the mold under a force of 180 N, for example.

With a conventional example (an electrolytic capacitor without the external pressure deformation suppressing plate 10 according to the embodiment), even with the molding resin 11 injected into the mold under a force of 120 N, the sealing material 6 was pushed deep into the body case 4. This resulted in a large movement of the sealing material 6, damaging the capacitor element 5.

By contrast, with a product according to the embodiment, even with the molding resin 11 injected into the mold under a force of 180 N, the face of the sealing material 6 closer to the capacitor element 5 moved toward the capacitor element 5 only by 1.25 mm. This, it was confirmed, had no effect on the structure and performance of the capacitor element 5.

This is a landmark effect in electrolytic capacitors 1 molded in molding resin 11, making it easy to mold electrolytic capacitors 1 in molding resin 11 for waterproofing, moisture-proofing, improved chemical-proofing, and dust proofing.

Why the product according to the embodiment brings this distinctive effect is not yet fully analyzed, while possible reasons are considered to be as follows.

First, since the external pressure deformation suppressing plate 10 is provided at the side of the sealing material 6 facing the opening 3 of the body case 4 and the drawn portion 4a radially drawn toward the sealing material 6 is provided in a part of the body case 4 that corresponds to a part of the sealing material 6 closer, along its plate thickness direction, to the capacitor element 5 relative to the external pressure deformation suppressing plate 10, the external pressure deformation suppressing plate 10 receives the thrust of the molding resin 11 tending to deform the sealing material 6 inward of the body case 4 and this is considered to hinder the movement of the side of the sealing material 6 closer to the capacitor element 5 toward the capacitor element 5.

In addition, in the product according to the embodiment, so that the external pressure deformation suppressing plate 10 can be provided at the side of the sealing material 6 facing the opening 3 of the body case 4, the sealing material 6 is provided with, in its face facing the opening 3 of the body case 4, the depressed portion 8 depressed toward the capacitor element 5 with an outer diameter smaller than that of the sealing material 6, and the outer circumference holding portion 9 around the outer circumference of the depressed portion 8.

Then, in the depressed portion 8, the external pressure deformation suppressing plate 10 in a plate shape is provided and at least part of the outer circumferential portion of the external pressure deformation suppressing plate 10 provided in the depressed portion 8 is covered with an inner circumferential part of the outer circumference holding portion 9 of the sealing material 6.

Moreover, in a part of the body case 4 that corresponds to a part of the sealing material 6 closer, along its plate thickness direction, to the capacitor element 5 relative to the external pressure deformation suppressing plate 10, the drawn portion 4a radially drawn toward the sealing material 6 is provided, and in the opening 3 of the body case 4, the bent portion 4b is provided with a tip part of the body case 4 facing the opening 3 bent to be curved toward the sealing material 6. The tip of the bent portion 4b is in contact with or close to the face of the external pressure deformation suppressing plate 10 facing the opening 3 of the body case 4, which face is provided in a part of the sealing material 6 inward of the outer circumference holding portion 9.

Now, the flow of the molding resin 11 in the above configuration will be described with reference to Figs. 4 and 5. In the opening 3 of the body case 4, the molding resin 11 flows to the face of the external pressure deformation suppressing plate 10 facing the opening 3 of the body case 4, and then flows through the gap between the external pressure deformation suppressing plate 10 and the tip of the bent portion 4b in contact with or close to its surface into the bent portion 4b of the body case 4; the molding resin 11 then presses the outer circumference holding portion 9 of the sealing material 6 inward, that is, toward the external pressure deformation suppressing plate 10.

As a result, the outer circumferential portion of the external pressure deformation suppressing plate 10 is firmly held by the outer circumference holding portion 9 of the sealing material 6 and the external pressure deformation suppressing plate 10 receives the thrust of the molding resin 11 tending to deform the sealing material 6 inward of the body case 4; this is considered to hinder the movement of the side of the sealing material 6 closer to the capacitor element 5 toward the capacitor element 5.

Further, in the product according to the embodiment, the outer circumferential surface of the outer circumference holding portion 9 of the sealing material 6 is the inclined face 9a (or curved face) with a diameter decreasing from a part of the outer circumference holding portion 9 closer to the capacitor element 5 toward a part of it facing the opening 3 of the body case 4; this increases the area of the outer circumference holding portion 9 of the sealing material 6 that receives the thrust of the molding resin 11 toward the external pressure deformation suppressing plate 10. This allows the outer circumference holding portion 9 of the sealing material 6 to firmly hold the outer circumferential portion of the external pressure deformation suppressing plate 10.

Thus, the external pressure deformation suppressing plate 10 receives the thrust of the molding resin 11 tending to deform the sealing material 6 inward of the body case 4; this is considered to hinder the movement of the side of the sealing material 6 closer to the capacitor element 5 toward the capacitor element 5.

Further, in the product according to the embodiment, as shown in Fig. 3, inward of the body case 4, a gap is formed at a part of it facing the inclined face 9a (or curved face) of the outer circumference holding portion 9 of the sealing material 6 and it is the gap 4c which is increasingly large from a part of the outer circumference holding portion 9 closer to the capacitor element 5 toward a part of the outer circumference holding portion 9 facing the opening 3 of the body case 4.

Thus, the thrust of the molding resin 11 is more likely to push the outer circumference holding portion 9 of the sealing material 6 toward the external pressure deformation suppressing plate 10; this allows the outer circumference holding portion 9 of the sealing material 6 to firmly hold the outer circumferential portion of the external pressure deformation suppressing plate 10. Thus, the external pressure deformation suppressing plate 10 receives the thrust of the molding resin 11 tending to deform the sealing material 6 inward of the body case 4; this is considered to hinder the movement of the side of the sealing material 6 closer to the capacitor element 5 toward the capacitor element 5.

In addition, the external pressure deformation suppressing plate 10 is formed of a compound resin plate with a reinforcing material such as glass fiber, cellulose fiber, or ceramic fiber mixed in it. Thus, the external pressure deformation suppressing plate 10 receives the thrust of the molding resin 11 tending to deform the sealing material 6 inward of the body case 4; this is considered to hinder the movement of the side of the sealing material 6 closer to the capacitor element 5 toward the capacitor element 5.

With the embodiment, it is possible to suppress a drop in the sealing effect of the sealing material 6 for the body case 4 resulting from expansion and contraction of the body case 4 depending on the environment around the electrolytic capacitor 1.

Since the sealing material 6 according to the embodiment has the depressed portion 8 with an outer diameter smaller than that of the sealing material 6 and has, in the depressed portion 8, the external pressure deformation suppressing plate 10, the outer circumferential portion of the sealing material 6 less tends to be restrained by the external pressure deformation suppressing plate 10. That is, if the sealing material 6 is fitted with an external pressure deformation suppressing plate 10 with the same outer diameter as the sealing material 6, the external pressure deformation suppressing plate 10 restrains the expansion and contraction of the sealing material 6, which thus cannot expand and contract effectively, leading to a poor sealing effect of the sealing material 6 for the body case 4. By contrast, according to the embodiment, the depressed portion 8 with an outer diameter smaller than that of the sealing material 6 is provided and, in the depressed portion 8, the external pressure deformation suppressing plate 10 is provided. Thus, the outer circumferential portion of the sealing material 6 less tends to be restrained by the external pressure deformation suppressing plate 10; this allows the outer circumference of the sealing material 6 to expand and contract in response to the expansion and contraction of the body case 4 depending on the environment around the electrolytic capacitor 1. Thus, it is possible to suppress a drop in the sealing effect for the body case 4.

### Reference Signs List

- 1: electrolytic capacitor
- 1a: seat plate
- 2: circuit board
- 3: opening
- 4: body case
- 4a: drawn portion
- 4b: bent portion
- 4c: gap
- 5: capacitor element
- 6: sealing material
- 7: lead terminal
- 8: depressed portion
- 9: outer circumference holding portion
- 9a: inclined face
- 10: external pressure deformation suppressing plate
- 11: molding resin

## Claims

1. An electrolytic capacitor comprising:
a body case in a cylindrical shape that is closed at one end and that has an opening at the other end;
a capacitor element housed in the body case; and
a sealing material in a plate shape that seals the opening of the body case,
the capacitor element including an anode foil and a cathode foil wound up with a separator in between, with one ends of lead terminals connected to the anode and cathode foils respectively, with other ends of the lead terminals laid through the sealing material out of the opening of the body case,
wherein
the sealing material has, in a face thereof facing the opening of the body case, a depressed portion depressed toward the capacitor element with an outer diameter smaller than an outer diameter of the sealing material, and an outer circumference holding portion around an outer circumference of the depressed portion,
in the depressed portion, an external pressure deformation suppressing plate in a plate shape is provided, and at least part of an outer circumferential portion of the external pressure deformation suppressing plate provided in the depressed portion is covered with an inner circumferential part of the outer circumference holding portion of the sealing material,
in a part of the body case that corresponds to a part of the sealing material closer, along a plate thickness direction thereof, to the capacitor element relative to the external pressure deformation suppressing plate, a drawn portion is provided that is radially drawn toward the sealing material, and
in the opening of the body case, a tip part of the body case facing the opening is bent to be curved toward the sealing material to form a bent portion, and a tip of the bent portion is in contact with or close to a face of the external pressure deformation suppressing plate facing the opening of the body case, the face being provided in a part of the sealing material inward of the outer circumference holding portion.

2. The electrolytic capacitor according to claim 1, wherein an outer circumferential surface of the outer circumference holding portion of the sealing material is an inclined face or a curved face with a diameter decreasing from a part thereof closer to the capacitor element toward a part thereof facing the opening of the body case.

3. The electrolytic capacitor according to claim 2, wherein a gap formed, inward of the body case, at a part thereof facing the inclined face or the curved face of the outer circumference holding portion of the sealing material is a gap which is increasingly large from a part of the outer circumference holding portion closer to the capacitor element toward a part of the outer circumference holding portion facing the opening of the body case.

4. The electrolytic capacitor according to any one of claims 1 to 3, wherein the external pressure deformation suppressing plate is formed of a compound resin plate with a reinforcing material mixed therein.
